# EUROPEAN PATENT APPLICATION

(11) **EP 1 757 423 A1**
(43) Date of publication of application: **28.02.2007**
(21) Application number: 06380072.6
(22) Date of filing: 07.04.2006
(51) Int. Cl.: B29B 17/00, C04B 20/10, E04B 1/74, E04B 1/94, E04C 2/00, C04B 28/00

(54) **Method of manufacturing fire resistant plates**

(30) Priority: 07.04.2005 AR P050101380
(71) Applicant: Dragotta, Ricardo, Partido de Tres de Febrero, Pr. Buenos Aires (AR)
(72) Inventor: Dragotta, Ricardo, Partido de Tres de Febrero, Pr. Buenos Aires (AR)
(74) Representative: Polo Flores, Luis Miguel

(57) **Abstract**

The method of the invention comprises the steps of: a) employing expanded polystyrene portions of small dimension; b) subjecting said portions to milling until a grain size defining a fine micro-particles powder is obtained; c) placing said powder material into proper containers and immersing them into an aqueous solution comprising a fluidizer and a fire resistant product; d) processing the mixture for about 24 h using a stirrer until the saturation point is reached; e) filtering the obtained solution for draining the excess; f) employing the expanded polystyrene saturated solution obtained in the preceding steps as part of a mortar, using a stirrer and adding the required amount of water; g) pouring the uniform and viscous mixture obtained in the above step into molds giving the definite shape to each plate, into which molds setting and solidification drying is produced. Another object of the invention is a mortar including four parts of the expanded polystyrene saturated solution, three parts plaster, one part sand and one part lime, all these components being mixed with water, using a central stirrer with speed variator until a uniform and viscous mixture is obtained determined by the setting starting time of the incorporated plaster. It is also an object of the invention the fire resistant plate obtained with the method of the invention, which is a rigid plate constituted by the mentioned mortar.

## Description

### FIELD OF THE INVENTION

The instant invention relates to a method of manufacturing a material for the construction of fire resistant plates and to the fire resistant plate obtained with such method, which may be applied as a coating or finishing plate for walls, or also as a plate for forming suspended ceilings, as well as acting as a plate forming part of roof structures, in which case it includes some kind of framework, or also as a plate for forming light partitions defining modular enclosures for offices and the like, among other foreseeable applications.

Particularly, the instant invention relates to a method created specially for obtaining a fire resistant material to be used in the constitution of mortars for manufacturing plates which will be applied as indicated above.

This is a novel construction material allowing the manufacture of completely fire resistant plates by means of the use of materials easily obtained in the market, and whose main object is safety against fire risks.

Therefore, it should be noted that the main advantage of the material obtained with the method of the invention is to produce plates, fire resistant per se, such that their use eliminates the need of applying additional finishing further to installation of the plates, such as the use of special fire resistant paints or other specific protective products.

### PRIOR ART

Various coating plates to be applied as mentioned above are presently known; however, plates manufactured from a material with clear fire resistant properties are not known.

Plates made of pressed cardboard, wooden agglomerates coated with plastic laminates, plaster, as well as those comprising plastic resins reinforced with glass fibers also coated with plastic material laminates are already known.

Plaster plates which are used for ceilings an also for certain kinds of partitions are also fire resistant since "plaster" is fire resistant per se.

However, when a plaster plate is exposed to direct fire, although it does not generate combustion, tends to tear away thus causing abrupt falling down of plate portions, which is risky specially when the portions are large.

The same occurs with lime mortars which do not ignite with fire but easily tear away.

### NOVELTY OF THE INVENTION - ADVANTAGES - MAIN OBJECT

The method of the invention is carried out starting from expanded polystyrene portions, preferably obtained from recycling of products made of said material, such as containers, boxes and several objects existing in the market.

Initially, small pieces are used, (about 3 mm) and these are subjected to milling until obtaining a grain size which, according to the tests carried out, defines a fine micro-particle powder.

This initial product is placed into containers suitable for being immersed into an aqueous solution constituted by a fluidizer and a fire resistant product.

The fluidizing product may be any of those known in the market, water soluble, such as that known under "Acrimol" trademark.

The fire resistant product may be any of those water soluble products known in the market.

The mixture is processed for about 24 h using a 500 rpm vane stirrer.

After this step, the solution obtained is transferred to another container with a filtering mesh for draining the solution excess, thus being in conditions to be incorporated as material constituting a definite mortar with which the fire resistant plates of the invention will be formed.

From the above step, an expanded polystyrene saturated solution is obtained which forms an uneven and pasty mass characterized by being highly fire resistant.

Minor polystyrene portions used as starting material for the method of the invention float in any liquid. With further milling, "breaking away" of the material is attained until it reaches the size of irregular micro-particles which, once mixed in said aqueous solution, under the mentioned conditions, become impregnated until the inner micro-cavities of each particle are completed. Therefore, it may be said that a saturated solution is obtained.

The mortar used for forming the plate of the invention may includes four parts of the expanded polystyrene saturated solution obtained in the preceding steps, three parts plaster, one part sand and one part lime, all these components being mixed with water, using a central stirrer with speed variator until a uniform and viscous mixture is attained, determined by the time of plaster setting.

As already known, the mortar obtained may be maintained with stirring to be sure its viscosity and homogeneity are preserved during the process of filling the molds, wherein vibration is also used so that such filling be homogeneous and free from pores.

Once this operation is over, plates are removed from the mold and placed on aerating shelves wherein the final setting and drying of each plate is obtained, naturally or by means of a drying tunnel.

Based on the tests carried out, it was demonstrated that the material of the invention is not inflammable due to the special treatment in solution to which expanded polystyrene is subjected before being used as part of the mortar.

It was demonstrated that polystyrene particles, impregnated with the components of the aqueous solution of which they form part, when the final homogeneous mixture is formed, are also coated and virtually separated among each other due to the binders used in the mortar, which makes that, when the plate is subjected to fire action, flames first consume the materials enclosing and wrapping said expanded polystyrene particles.

At the same time, heat emitted due to said previous consumption, also consumes said polystyrene particles before the fire is able to break the mortar away.

Specifically, it has been demonstrated that before fire flames reach the polystyrene particles, these are consumed by the heat emitted from the combustion of the materials enclosing and wrapping each of said particles.

This is a novel and extremely advantageous functional principle since flames never contact polystyrene which is consumed without a direct combustion which could expand the fire action. It is a double fire resistant action.

The plate obtained by the method of the invention is flat and may be applied directly on masonry, avoiding the need of prior plastering or without the need of stippling the existing plaster, it is perfectly fixed and bonded by means of usual mortars used for fixing ceramic tiles and glazed tiles. Joints between plates may be filled with a finishing coat of plaster so that once sandpapered, a finished surface is produced which is ready to receive paint.

The plate of the invention, including a corresponding framework, may be used to make structural roofs, in which case the plates are placed in a conventional manner, on beams for supporting the usual compression load. The advantage is that the lower face, i.e. the face seen from below, is completely finished, ready for painting.

If compared to traditional roofs using structures formed by beams and hollow bricks, usually called "frog" bricks, the advantage of the invention is that the amount of beams used per square meter is substantially reduced since the acceptable dimensions of each plate are notably larger than those of said "frog" bricks. On the other hand, it is to be noted that in order to form the roof using beams and "frog" bricks, application of a "concrete" mortar, rough plaster, fine plaster, finishing plaster are required, all these items being unnecessary if the plate of the invention is used, which, additionally, is fire resistant.

The plate of the invention may be also applied as suspended ceiling which is a known resource for shortening the height of existing ceilings, a suspended supporting framework being used to this end, on which the plates are placed. The invention affords the possibility of forming a ceiling which, apart from acting as an upper enclosure, is also fire resistant.

As already mentioned, the plate of the invention may be bonded by means of adhesive on walls and ceilings without stippling of the existing plasters.

The object of the instant invention is a method for manufacturing a material for the construction of fire resistant plates which may be used as plates for coating walls, for forming suspended ceilings, roof structures or light partitions of modular enclosures for offices or the like, and coating of iron structural columns, said method being specially designed for obtaining a fire resistant material to be used as part of the mortars constituting said plates.

The method of the invention comprises the steps of:
a) employing expanded polystyrene portions of small dimension;
b) subjecting said portions to milling until a grain size defining a fine micro-particles powder is obtained;
c) placing said powder material into proper containers and immersing them into an aqueous solution comprising a fluidizer and a fire resistant product;
d) processing the mixture for about 24 h using a stirrer until the saturation point is reached;
e) filtering the obtained solution for draining the excess;
f) employing the expanded polystyrene saturated solution obtained in the preceding steps as part of a mortar, using a stirrer and adding the required amount of water;
g) pouring the uniform and viscous mixture obtained in the above step into molds giving the definite shape to each plate, into which molds setting and solidification drying is produced.

Another object of the invention is preparing a mortar including four parts of the expanded polystyrene saturated solution, three parts plaster, one part sand and one part lime, all these components being mixed with water, using a central stirrer with a speed variator until a uniform and viscous mixture is obtained, determined by the setting starting time of the incorporated plaster.

The small portions of expanded polystyrene mentioned in step a) are of about 3 mm.

The invention also relates to the fact that the aqueous solution constituted by a fluidizer and a fire resistant product mixed with the powder material indicated in step c) is processed in step d) for about 24 h, using a 500 rpm vane stirrer, until the saturation point is reached.

Another object of the invention is the preparation of a fire resistant plate obtained with the above mentioned method, which is a rigid plate constituted by a mortar comprising four parts of the expanded polystyrene saturated solution, three parts plaster, one part sand and one part lime, mixed with water.

The invention contemplates the fact that the plate includes an inner structure made of expanded metal.

The invention also contemplates that the plate includes an inner structure constituted by a mesh made of metal rods.

Further, the invention contemplates that the plate includes an inner structure constituted by a mesh of expanded metal reinforced with metal rods.

### BRIEF DESCRIPTION OF THE DRAWINGS

In order to put into practice the above mentioned advantages, to which users and those skilled in the art may add further advantages, and to facilitate comprehension of the constructive, constitutive and functional features of the method of manufacturing the material and the plate of the invention, a preferred embodiment will be described herein below, with reference to the attached drawings. The description, being an example, does not limit or exclude the scope of protection of the present invention, but merely is intended to explain and show the basic concept on which the invention is based.
Figure 1 is a perspective view showing a fire resistant plate, obtained from a mortar prepared with the method of the instant invention.
Figure 2 is a vertical cross section of the plate of figure 1.
Figure 3 is a perspective view showing a wall to which the plates of the invention are applied.
Figure 4 is a perspective view showing a plate of the invention, applied to a roof forming structure.
Figure 5 is another perspective view showing another possible application of the plate obtained with the method of the instant invention.
Figure 6 is a horizontal cross section representing the same use as that shown in figure 5.
In all figures the same reference numerals or letters correspond to the same or equivalent parts or elements constituting the invention, based on the preferred embodiment selected for explaining the method and plate of the invention.

### DETAILED DESCRIPTION OF A PREFERRED EMBODIMENT

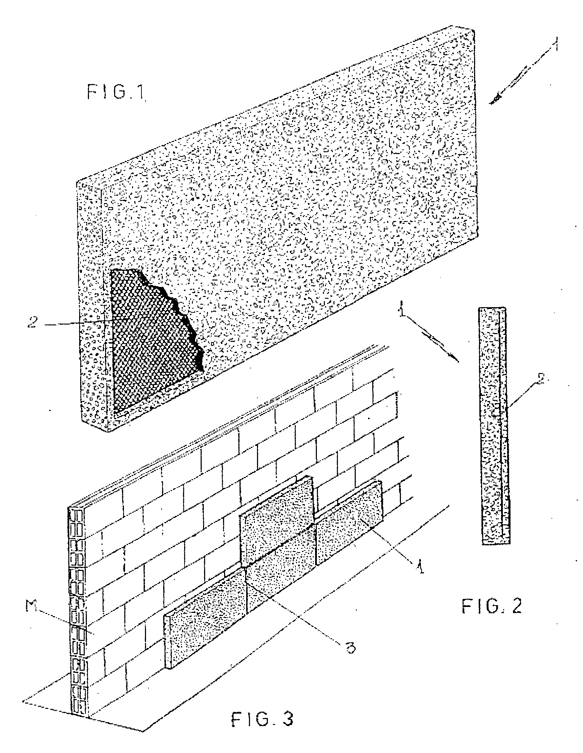

As shown in figures 1 and 2, a preferred embodiment of the rigid fire resistant plate obtained with the material of he present invention comprises a single and monolithic block (1) having smooth faces, constituted by a mortar containing four parts of an expanded polystyrene saturated solution, three parts plaster, one part sand and one part lime and an inner structural core (2) formed by an expanded metal sheet.

Figure 3 shows a possible application of the plate of the invention (1), as a finishing coating which, in turn, provides protection against the fire action. Each plate (1) may be bonded directly on the wall (M) without requiring plastering. In order to fix the plates known cement adhesives used conventionally to apply ceramic coatings, glazed tiles and the like are used. Joints (3) may be filled in with finishing coats of plaster until they become coplanar to the outer faces of the plates, in which case, paints may be applied after sandpapering the surface.

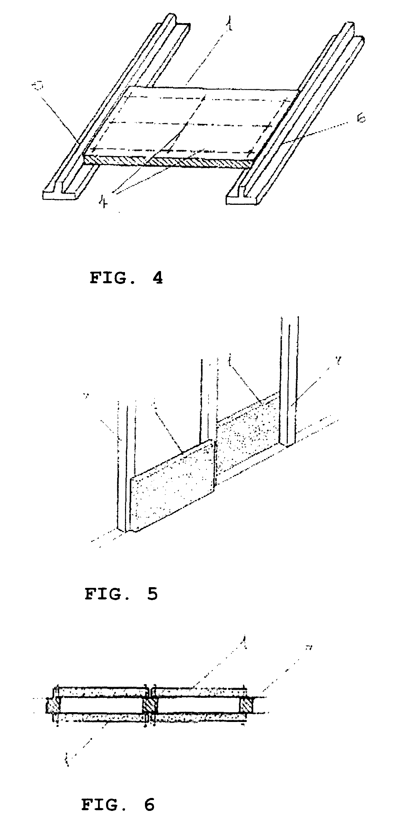

Figure 4 shows another possible application of the plate of the invention, for forming a self-supporting roof structure of the kind comprising beams (5) and (6) on which plates are seated and fixed, in this case the fire resistant plates (1).

To this end, the plate of the invention, apart from the mortar and the expanded metal, should include a metal rod mesh (4) for structural reinforcement.

Figure 5 shows another foreseeable application in which the plates of the invention (1) fixed to vertical columns (7) constitute enclosing partitions which may be used in several applications.

From the above described and shown examples it is clear that there are several alternatives of use that could be put into practice with the fire resistant mortar obtained with the method of the instant invention, all these alternatives being comprised within the scope of protection of the instant invention, this scope being determined by the appended claims.

## Claims

1. Method of manufacturing a material for the construction of fire resistant plates, which may be used as coating plates for walls, for forming suspended ceilings, forming part of roof structures or forming light partitions of modular enclosures for offices or the like, said method being specially designed for obtaining a fire resistant material capable of being used as part of mortars constituting said plates, **characterized by** comprising the steps of:
a) employing expanded polystyrene portions of small dimension;
b) subjecting said portions to milling until a grain size defining a fine micro-particles powder is obtained;
c) placing said powder material into proper containers and immersing them into an aqueous solution comprising a fluidizer and a fire resistant product;
d) processing the mixture for about 24 h using a stirrer until the saturation point is reached;
e) filtering the obtained solution for draining the excess;
f) employing the expanded polystyrene saturated solution obtained in the preceding steps as part of a mortar, using a stirrer and adding the required amount of water;
g) pouring the uniform and viscous mixture obtained in the above step into molds giving the definite shape to each plate, into which molds setting and solidification drying is produced.

2. Method of manufacturing a material for the construction of fire resistant plates, as claimed in claim 1, **characterized in that** the mortar prepared in step f), includes four parts of the expanded polystyrene saturated solution obtained in the preceding steps, three parts plaster, one part sand and one part lime, all these components being mixed with water, using a central stirrer with speed variator until a uniform and viscous mixture is attained, determined by the time of plaster setting.

3. Method of manufacturing a material for the construction of fire resistant plates, as claimed in claim 1, **characterized in that** the small expanded polystyrene portions mentioned in step a) are of about 3 mm.

4. Method of manufacturing a material for the construction of fire resistant plates, as claimed in claim 1, **characterized in that** the aqueous solution constituted by the fluidizer and a fire resistant product mixed with the powder material according to step c) is processed in step d) for about 24 h using a 500 rpm vane stirrer until the saturation point is reached.

5. Fire resistant plate, obtained with the method claimed in claims 1 to 4, **characterized in that** it is a rigid plate constituted by a mortar formed by four parts of the expanded polystyrene saturated solution obtained in the preceding steps, three parts plaster, one part sand and one part lime, all these components being mixed with water.

6. Fire resistant plate, as claimed in claim 5, **characterized in that** the plate includes an inner structure made of expanded metal.

7. Fire resistant plate, as claimed in claim 5, **characterized in that** the plate includes an inner structure made of metal rod mesh.

8. Fire resistant plate, as claimed in claim 5, **characterized in that** the plate includes an inner structure made of a metal mesh reinforced with metal rods.
